# EUROPÄISCHE PATENTANMELDUNG

(11) **EP 4 711 253 A2**
(43) Veröffentlichungstag der Anmeldung: **18.03.2026**
(21) Anmeldenummer: 25184380.1
(22) Anmeldetag: 23.06.2025
(51) Int. Cl.: B62D 49/00, B62D 21/00, B60K 1/00, B60K 1/02, B60K 1/04

(54) **TRAKTOR MIT EINEM FAHRGESTELL UND VERWENDUNG**

(30) Priorität: 24.07.2024 DE 102024120989
(71) Anmelder: CLAAS Tractor S.A.S., 78141 Vélizy-Villacoublay Cedex (FR)
(72) Erfinder: Heymann, Philipp, 59519 Möhnesee Wamel (DE); Wieckhorst, Jan Carsten, 29525 Uelzen Orsteil Hanstedt 2 (DE); Wilk, Benjamin, 37671 Höxter (DE); Fedde, Thomas, 33129 Delbrück (DE); Ramm, Marco, 33104 Paderborn (DE); Middendorf, Heiko, 59581 Warstein (DE); Guitton, Paul Henri, 78730 PLAISIR (FR); Carrie, Sebastien, 78320 Le Mesnil-Saint-Deni (FR); Pannard, Mathieu, 72650 Saint Saturnin (FR)
(74) Vertreter: CLAAS Gruppe

(57) **Zusammenfassung**

Die Erfindung betrifft einen batterieelektrischer Traktor (1) mit einem Fahrgestell (3), das eine Vorderachsbaugruppe (100), eine Getriebebaugruppe (300), und eine Hinterachsbaugruppe (400) aufweist, wobei die Getriebebaugruppe (300) eine Antriebsanordnung (4) mit einem elektromotorisch angetriebenen Getriebe (5) für den Fahrantrieb des Traktors (1) umfasst, und wobei das Fahrgestell (3) einen Rahmen (200) zur strukturlastentragenden Verbindung der Getriebebaugruppe (300) und der Vorderachsbaugruppe (100) aufweist.

## Beschreibung

Die vorliegende Erfindung betrifft einen Traktor mit einem Fahrgestell, das eine Vorderachsbaugruppe, eine Getriebebaugruppe mit einer Antriebsanordnung für den Fahrantrieb des Traktors, und eine Hinterachsbaugruppe aufweist.

Die Ausgestaltung des Fahrgestells eines Traktors stellt regelmäßig eine große Herausforderung dar. Bei verbrennungsmotorisch betriebenen Traktoren ist es zumeist so, dass die Getriebebaugruppe zwischen der Hinterachsbaugruppe und der Vorderachsbaugruppe angeordnet ist und diese zumindest mittelbar miteinander verbindet. Aufgrund der stetig zunehmenden, verbesserten und kostengünstiger werdenden Energiespeicher und Elektromotoren werden allerdings vermehrt auch Elektrifizierungsansätze für Traktoren entwickelt. Es herrscht Bedarf, elektrifizierte Traktoren bereitzustellen. Bei einer Elektrifizierung des Fahrantriebs ist es noch nicht gelungen, ein zufriedenstellend wirtschaftliches und stabiles Fahrgestell bereitzustellen. Das in der DE 10 2012 004 863 A1 beschriebene Fahrgestell in Blockbauweise ist im Hinblick auf eine Elektrifizierung verbesserungsbedürftig.

Insoweit stellt sich die Aufgabe, im Hinblick auf einen Traktor Lösungen anzugeben, um ein elektrifiziertes Fahrgestell wirtschaftlich und stabil umsetzen zu können. Insbesondere sollen die Nachteile aus dem Stand der Technik vermieden oder zumindest reduziert werden.

Die Aufgabe wird erfindungsgemäß durch die Merkmale der unabhängigen Ansprüche gelöst. Vorteilhafte Ausführungsformen sind in den Unteransprüchen, in den Figuren, in der Beschreibung sowie in den anliegenden Figuren angegeben.

Vorgeschlagen wird ein batterieelektrischer Traktor mit einem Fahrgestell, das eine Vorderachsbaugruppe, eine Getriebebaugruppe, und eine Hinterachsbaugruppe aufweist. Die Getriebebaugruppe umfasst eine Antriebsanordnung mit einem elektromotorisch angetriebenen Getriebe für den Fahrantrieb des Traktors. Das Fahrgestell weist einen Rahmen zur strukturlastentragenden Verbindung der Getriebebaugruppe und der Vorderachsbaugruppe auf.

Anders gesagt, beispielsweise, wird ein Traktor vorgeschlagen, der elektrisch angetrieben ist, und der ein modulares Chassis aufweist. Das Chassis ist zusammengesetzt aus zumindest einem Vorderachsmodul, einem elektrischen Antriebsmodul mit einem Getriebe, einem Hinterachsmodul, und einem Verbindungsmodul mit einem Träger bzw. einer starren Verbindungsstruktur. Das Verbindungsmodul ist eingerichtet zur Bereitstellung einer strukturellen Verbindung zwischen dem Vorderachsmodul und dem Antriebsmodul.

Mit der Erfindung wurde erkannt, dass vorbekannte verbrennungsmotorisch betriebene Traktoren häufig eine Blockbauweise aufweisen, wobei diese Blockbauweise bei einer Elektrifizierung übernommen werden soll. Ein verbrennungsmotorisch betriebener Traktor umfasst regelmäßig ein Fahrgestell bzw. Chassis, welches eine Vorderachsbaugruppe, eine Antriebsanordnung mit einem einem Motorblock, einer Ölwanne und einem Getriebe bzw. Fahrgetriebe, und eine Hinterachsbaugruppe aufweist. Diese Komponenten bilden bei der Blockbauweise die tragende Struktur des Traktors. Die Erfindung befasst sich mit dem strukturellen Problem, dass bei einer Elektrifizierung kein Motorblock und auch keine Ölwanne vorhanden sind, so dass die Umsetzung der Blockbauweise eigentlich nicht möglich erscheint. Da anstelle des Verbrennungsmotors ein Elektromotor tritt, wird der Antriebsstrang mit dieser Erfindung vollständig neu und abweichend von den konventionellen Ansätzen konzipiert, was sich unmittelbar auf die Architektur, insbesondere den Aufbau des Fahrgestells bzw. Chassis, des Traktors auswirkt. Insoweit wird mit der Erfindung vorteilhaft eine Komponente vorgeschlagen, die beispielsweise anstelle des Verbrennungsmotors unter Erhalt der Blockbauweise tritt, und zwar der Rahmen.

Ein Traktor ist insbesondere eine landwirtschaftliche Arbeitsmaschine bzw. ein landwirtschaftliches Fahrzeug. Als batterieelektrischer Traktor kann der Traktor ganz oder zumindest teilweise elektrisch angetrieben werden, d.h. hinsichtlich des Fahrantriebs und insbesondere hinsichtlich Hilfsaggregaten des Traktors. Elektrisch angetrieben bedeutet insbesondere, dass ein Elektromotor zum Antrieb genutzt werden kann. Der Traktor steht typischerweise über Bodeneingriffsmittel an jeweils der Vorderachsbaugruppe und der Hinterachsbaugruppe in Kontakt mit dem Boden bzw. Untergrund. Die Bodeneingriffsmittel, beispielsweise Räder und/oder Raupenlaufwerke, können angetrieben sein bzw. werden.

Das Fahrgestell ist insbesondere ein tragendes Teil des Traktors bzw. strukturtragend. Das Fahrgestell hat insbesondere die Funktion, Lasten, Komponenten und/oder Aufbauten des Traktors zu tragen und gegen Lasteinwirkungen zu stabilisieren. Insbesondere ist das Fahrgestell als Bodengruppe ausgebildet.

Eine Baugruppe ist beispielsweise als integral ausgebildete Komponente und/oder als Modul eingerichtet. Einer Baugruppe ist regelmäßig eine oder mehrere mögliche Funktionen des Traktors zuzuordnen, beispielsweise Federung und Dämpfung, Antrieb, Bremse, Lenkung, Arbeitsfunktion und/oder Weiteres. Eine Baugruppe weist typischerweise mechanische und vorzugsweise elektromechanische bzw. elektrische Komponenten auf, wobei die Komponenten beispielsweise zusammengesetzt und/oder aneinander befestigt sind. Das Fahrgestell weist insbesondere Baugruppen hinsichtlich Vorderachse, Hinterachse und Getriebe auf.

Die Vorderachsbaugruppe weist beispielsweise vordere Bodeneingriffsmittel auf. Die Vorderachsbaugruppe weist beispielsweise einen vorderen Rahmenabschnitt auf, der eine Vorderachse nebst den Bodeneingriffsmitteln trägt. Die Vorderachsbaugruppe kann ein Lenkgetriebe für die Bodeneingriffsmittel aufweisen. Alternativ oder ergänzend kann ein Vorderachsdifferential, und optional eine Vorderachsdifferentialsperre, in der Vorderachsbaugruppe enthalten und/oder an dieser befestigt sein. Die Vorderachse kann gefedert und/oder als Pendelachse ausgebildet sein. Die Vorderachsbaugruppe kann ein oder mehrere Hilfsaggregate des Traktors aufweisen und/oder stützen. Die Vorderachsbaugruppe kann beispielsweise einen Frontkraftheber, eine Bremse bzw. Bremseinrichtung, eine vordere Zapfwelle bzw. zweite Ausgangswelle, einen Hubzylinder und/oder Weiteres aufweisen und/oder stützen.

Die Getriebebaugruppe weist die Antriebsanordnung oder zumindest Teile von dieser auf. Die Antriebsanordnung weist das Getriebe auf. Das Getriebe ist elektromotorisch angetrieben und kann den Fahrantrieb des Traktors leisten bzw. das Drehmoment hierzu bereitstellen und/oder übertragen. Das Getriebe kann beispielsweise auch Hilfsaggregate des Traktors antreiben. Beispielsweise weist die Antriebsanordnung bzw. das Getriebe einen oder mehrere Elektromotoren für den Fahrantrieb auf. Der oder die Elektromotoren können, je nach Größe, teilweise bzw. bereichsweise oder vollständig in der Getriebebaugruppe enthalten sein bzw. darin angeordnet sein oder auch im Rahmen angeordnet sein. Der oder die Elektromotoren können außen an einem Getriebegehäuse angeordnet sein und/oder teilweise oder vollständig in dem Getriebegehäuse integriert sein.

Die Hinterachsbaugruppe weist beispielsweise hintere Bodeneingriffsmittel auf. Die Hinterachsbaugruppe weist beispielsweise einen hinteren Rahmenabschnitt auf, der eine Hinterachse nebst den Bodeneingriffsmitteln trägt. Die Hinterachsbaugruppe kann ein Lenkgetriebe für die Bodeneingriffsmittel aufweisen. Alternativ oder ergänzend kann ein Hinterachsdifferential, und optional eine Hinterachsdifferentialsperre, in der Hinterachsbaugruppe enthalten und/oder an dieser befestigt sein. Die Hinterachsbaugruppe kann ein oder mehrere Hilfsaggregate des Traktors aufweisen und/oder stützen. Die Hinterachsbaugruppe kann beispielsweise eine Hydraulikeinrichtung bzw. Hydraulikpumpe oder mehrere davon (beispielsweise für das Getriebe als Getriebe-Hydraulik und/oder für den Traktor als Traktor-Hydraulik), eine Bremse bzw. Bremseinrichtung, einen Hubzylinder, eine Anhängerkupplung, ein Zugpendel, eine hintere Zapfwelle bzw. zweite Ausgangswelle, und/oder Weiteres aufweisen und/oder stützen. Insbesondere kann die Hinterachsbaugruppe mit einem Heckhubwerk versehen sein.

Der Rahmen ist zur strukturlastentragenden Verbindung der Getriebebaugruppe und der Vorderachsbaugruppe vorgesehen, insbesondere dazu eingerichtet. Der Rahmen kann als wenigstens bereichsweise oder vollständig starre Verbindungsstruktur ausgebildet sein. Der Rahmen kann einstückig bzw. monolithisch, insbesondere aus einem Werkstoff, insbesondere Metallwerkstoff, gebildet sein. Der Rahmen kann auch mehrteilig sein bzw. aus mehreren Teilen zusammengesetzt sein. Der Rahmen ist beispielsweise an der Getriebebaugruppe und/oder an der Vorderachsbaugruppe, insbesondere lösbar, befestigt, insbesondere daran verschraubt, um diese aneinander festzulegen und strukturlasttragend bzw. strukturlastentragend zu verbinden. Der Rahmen kann bündig an der Getriebebaugruppe und/oder an der Vorderachsbaugruppe anliegen und insbesondere daran festgelegt sein.

Insbesondere sind die Vorderachsbaugruppe und die Getriebebaugruppe, typischerweise mittelbar, über den Rahmen miteinander verbunden. Der Rahmen kann Kräfte zwischen den Baugruppen übertragen. Bevorzugt ist der Rahmen, insbesondere zumindest bereichsweise oder vollständig, starr ausgebildet. Der Rahmen ist beispielsweise wenigstens bereichsweise hohl ausgebildet und kann einen Innenraum bzw. Aufnahmeraum bereitstellen, beispielsweise zur Gewichtsersparnis. Der Rahmen kann seitens der Vorderachsbaugruppe und/oder seitens der Getriebebaugruppe einen Flansch aufweisen, um eine insbesondere lösbare Verbindung bereitzustellen. Der Flansch kann quer bzw. orthogonal zur Wandung und/oder vertikal orientiert sein. Der Rahmen weist regelmäßig gegenüberliegende Rahmenabschnitte auf, beispielsweise Wandungen, die insbesondere aneinander festgelegt sind. Insoweit können eine hohe Stabilität mit Blick auf typische im Betrieb auftretende Kräfte und zugleich Bauraum im Rahmen selbst erhalten werden.

Vorzugsweise ist der Rahmen zwischen der Getriebebaugruppe und der Vorderachsbaugruppe angeordnet und beispielsweise daran befestigt, bevorzugt in Fahrzeuglängsrichtung dazwischen, bevorzugt direkt angrenzend an die Getriebebaugruppe und/oder die Vorderachsbaugruppe angeordnet bzw. daran befestigt. Zudem kann die Getriebebaugruppe zwischen dem Rahmen und der Hinterachsbaugruppe angeordnet sein und beispielsweise daran befestigt sein, bevorzugt in Fahrzeuglängsrichtung dazwischen, bevorzugt direkt angrenzend an die Hinterachsbaugruppe und/oder den Rahmen angeordnet bzw. daran befestigt sein. Vorzugsweise ist der Rahmen an der Getriebebaugruppe und/oder der Vorderachsbaugruppe befestigt, insbesondere daran verschraubt. Der Rahmen schafft in dieser Position beispielsweise die Möglichkeit, die Traktor- bzw. Fahrzeuglänge durch Veränderung des Rahmens selbst anzupassen, ohne dass die Getriebebaugruppe und die Hinterachsbaugruppe Wesentlich verändert werden müssen. Der Rahmen schafft insoweit konstruktive Flexibilität.

Vorzugsweise ist der Rahmen, beispielsweise wenigstens abschnittsweise oder zumindest im Wesentlichen vollständig, als Schweißkonstruktion und/oder als Gussteil ausgebildet. Der Rahmen kann einen Metallwerkstoff, beispielsweise eine Eisenlegierung bzw. eine Stahllegierung, aufweisen oder daraus bestehen. Der Rahmen weist beispielsweise den Metallwerkstoff und/oder einen Verbundwerkstoff, beispielsweise mit einer Polymerzusammensetzung bzw. mit einem Kunststoffmaterial auf. Beispielsweise ist der Rahmen aus mehreren Teilen, insbesondere Gussteilen, zusammengesetzt. Einzelteile des Rahmens können miteinander verschraubt und/oder verschweißt sein. Insoweit wird eine kostengünstige Herstellung ermöglicht und zugleich eine stabile Konstruktion erreicht. Die Kraftflüsse in Schweiß- bzw. Gussteilen können günstig ausgestaltet werden, beispielsweise um Einflüsse von Kerbwirkung zu minimieren.

Der Rahmen kann eine oder mehrere Wandungen, beispielsweise zwei Wandungen, aufweisen. Die zwei Wandungen können quer zur Fahrzeuglängsrichtung gegenüberliegend angeordnet sein. Die Wandungen sind vorzugsweise starr ausgebildet. Die Wandungen können Außenflächen des Fahrgestells bereitstellen. Die Wandungen können zumindest im Wesentlichen und/oder abschnittsweise parallel zueinander angeordnet sein. Beispielsweise sind die Wandungen voneinander beabstandet, insbesondere betrachtet in Richtung quer zur Fahrzeuglängsrichtung, und/oder erstrecken sich zumindest im Wesentlichen vertikal und/oder in Fahrzeuglängsrichtung. Die Wandungen sind vorzugsweise relativ zueinander festgelegt.

Der Rahmen, insbesondere zumindest eine von den Wandungen, kann eine Befestigungsmöglichkeit, insbesondere eine oder mehrere Bohrungen, zum Befestigen einer Frontladerkonsole aufweisen. Beispielsweise ist die Befestigungsmöglichkeit außenseitig an der jeweiligen Wandung zugänglich und/oder dort eingebracht, insbesondere um die Frontladerkonsole anzubringen. Es können auch mehrere Befestigungsmöglichkeiten vorgesehen sein. Je Wandung ist vorzugsweise zumindest eine Befestigungsmöglichkeit vorgesehen. Die Befesigungsmöglichkeiten können in voneinander abgewandte Richtungen weisen. Der Rahmen kann damit vorteilhaft die Frontladerkonsole tragen. Die Frontladerkonsole kann Teil des Traktors sein.

Der Rahmen, insbesondere zumindest eine von den Wandungen, kann einen Halter zum Abstützen und Befestigen einer Kabine des Traktors aufweisen bzw. damit versehen sein. Insbesondere kann der Rahmen eine Vorderseite der Kabine tragen. Es können auch mehrere Halter vorgesehen sein. Je Wandung ist vorzugsweise zumindest ein Halter vorgesehen. Die Halter können gegenüberliegend, vorzugsweise außenseitig und/oder oberseitig an einer jeweiligen Wandung, angeordnet sein. Beispielsweise weist der Halter eine oberseitige Auflagefläche auf, die zumindest im Wesentlichen horizontal orientiert sein kann.

Der Rahmen kann mittels der Befestigungsmöglichkeit bzw. mittels des Halters weitere Eignung bereitstellen, um Komponenten und/oder Hilfsaggregate am Traktor zu befestigen. Insoweit kann die Flexibilität im Einsatz des Traktors verbessert werden.

Der Traktor kann einen Energiespeicher zur Energieversorgung der Antriebsanordnung aufweisen. Der Energiespeicher kann die elektrische Energie zum Fahrantrieb und/oder zum Antrieb der Hilfsaggregate bereitstellen. Der Energiespeicher ist vorzugsweise zumindest bereichsweise oberhalb des Rahmens angeordnet. Der Energiespeicher kann zumindest bereichsweise auf dem Rahmen abgestützt sein. Der Rahmen, bevorzugt die Wandungen, kann einen oder mehrere zweite Halter zum Abstützen und/oder Befestigen des Energiespeichers aufweisen. Der oder die zweiten Halter können analog zu dem voranstehend genannten Halter ausgebildet sein.

Der Rahmen kann einen insbesondere unterseitigen Boden aufweisen. Der Rahmen kann eine Öffnung aufweisen. Es kann eine oberseitige und/oder eine unterseitige Öffnung vorgesehen sein. Der Boden kann mit einem oder mehreren Versteifungselementen, beispielsweise Rippen, versehen sein und/oder dadurch gebildet sein. Die Wandungen können mit dem Versteifungselemente bzw. den Versteifungselementen insbesondere starr verbunden sein. Das Versteifungselement ist, vorzugsweise wenigstens abschnittsweise, quer zur Fahrzeuglängsrichtung orientiert. Beispielsweise ist über die Öffnung eine Eingangsseite des Getriebes und/oder ein oder die Elektromotoren des Getriebes zugänglich.

Das Getriebe kann einen ersten Zweig für den Fahrantrieb des Traktors und optional einen zweiten Zweig für den Antrieb von Hilfsaggregaten des Traktors aufweisen. Vorzugsweise weist der erste Zweig einen ersten Elektromotor für den Fahrantrieb, insbesondere über eine erste Ausgangswelle, auf. Vorzugsweise weist der zweite Zweig einen zweiten Elektromotor für den Antrieb der Hilfsaggregate, insbesondere über die zweite Ausgangswelle bzw. Zapfwelle, auf. Es ist auch denkbar, dass der erste Elektromotor für den Antrieb der Hilfsaggregate und/oder der zweite Elektromotor für den Fahrantrieb eingerichtet sind/ist.

Die Antriebsanordnung weist insbesondere ein Getriebe mit dem ersten und dem zweiten Zweig auf. Es können auch mehr als zwei Zweige vorgesehen sein. Ein Zweig ist beispielsweise als Drehmomentübertragungsstrecke zu verstehen. Ein Zweig des Getriebes erstreckt sich insbesondere zwischen einem Eingang und einem Ausgang, beispielsweise vom jeweiligen Elektromotor bis hin zu jeweiligen Ausgangswelle. Die Antriebsanordnung, insbesondere das Getriebe, kann den ersten Elektromotor und den zweiten Elektromotor aufweisen.

Der Rahmen kann seitens der Vorderachsbaugruppe einen Verjüngungsbereich und/oder seitens der Getriebebaugruppe einen Motoraufnahmebereich aufweisen. Vorzugsweise ist der Motoraufnahmebereich quer zur Fahrzeuglängsrichtung breiter als der Verjüngungsbereich. Beispielsweise ist der Verjüngungsbereich durch schräge und/oder konische Abschnitte der Wandungen gebildet. Vorzugsweise ist die Antriebsanordnung, insbesondere der Elektromotor oder die Elektromotoren, wenigstens teilweise in dem Motoraufnahmebereich und insbesondere zwischen den Wandungen aufgenommen. Der oder die Elektromotoren können sich im Wesentlichen parallel zu den Wandungen zwischen den Wandungen erstrecken.

Der Rahmen kann seitens der Vorderachsbaugruppe und/oder seitens der Getriebebaugruppe einen Durchgang, insbesondere einen Zugang und/oder eine Öffnung, aufweisen. Beispielsweise kann durch den Durchgang eine Zapfwelle und/oder eine Ausgangswelle geführt werden, z.B. um vom Getriebe bis zur Vorderachsbaugruppe geführt zu werden. Der Durchgang kann von einem Flansch gebildet bzw. umgeben sein.

Der erste Zweig ist vorzugsweise zwischen zumindest zwei Übersetzungsverhältnissen schaltbar und das Getriebe kann eine Verbindungseinrichtung, insbesondere Reibkupplung, aufweisen, die beispielsweise eingerichtet ist, in einer Geschlossenstellung den ersten und den zweiten Zweig drehmomentübertragend miteinander zu verbinden, um den zweiten Elektromotor für den Fahrantrieb des Traktors zu nutzen.

Zumindest einer der Zweige, bevorzugt der erste Zweig, ist insbesondere zwischen zwei oder mehr Übersetzungsverhältnissen bzw. Gängen schaltbar. Es kann ein Schaltvorgang vollzogen werden, der bevorzugt lastunterbrechend bzw. unter Unterbrechung des Kraftflusses erfolgen kann oder muss. Ein Übersetzungsverhältnis korrespondiert zu einem Geschwindigkeitsbereich bzw. zu einer Spreizung, das/die der jeweilige Zweig abdecken kann. Beispielsweise ist das erste Übersetzungsverhältnis niedriger als das zweite bzw. kürzer übersetzt als das, um durch Hochschalten vom ersten ins zweite Übersetzungsverhältnis einen höher liegenden Geschwindigkeitsbereich abdecken zu können. Insbesondere sind die Geschwindigkeitsbereiche bzw. Übersetzungsverhältnisse unterschiedlich. Bevorzugt weichen die Übersetzungsverhältnisse voneinander ab bzw. sind unterschiedlich. Bevorzugt sind ein niedriges und ein hohes Übersetzungsverhältnis vorgesehen. Die Übersetzungsverhältnisse bzw. Spreizungen können sich überlappen. Es können auch weitere Übersetzungsverhältnisse bzw. Geschwindigkeitsbereiche vorgesehen sein.

Der erste Zweig umfasst den ersten Elektromotor für den Fahrantrieb des Traktors bzw. ist von diesem angetrieben. Der erste Elektromotor kann ein Drehmoment bereitstellen, beispielsweise um den mit der Antriebsanordnung versehenen Traktor mittels Drehmomentfluss über den ersten Zweig anzutreiben. Der erste Zweig endet, insbesondere ausgehend vom ersten Elektromotor, bevorzugt an einer ersten Ausgangswelle oder mehreren davon. An der ersten Ausgangswelle kann dann, beispielsweise über weitere Welle(n) bzw. indirekt, das jeweilig angetriebene Bodeneingriffsmittel drehmomentübertragend angebunden werden.

Der zweite Zweig umfasst den zweiten Elektromotor für den Antrieb von Hilfsaggregaten des Traktors bzw. Hilfsaggregate sind von diesem angetrieben. Der zweite Elektromotor kann ein Drehmoment bereitstellen, beispielsweise um Hilfsaggregate über eine Zapfwelle mittels Drehmomentfluss über den zweiten Zweig anzutreiben. Der zweite Zweig endet, insbesondere ausgehend vom zweiten Elektromotor, bevorzugt an einer zweiten Ausgangswelle bzw. Zapfwelle oder mehreren davon. An der zweiten Ausgangswelle kann dann, beispielsweise über weitere Welle(n) bzw. indirekt oder auch direkt, das oder die jeweilig angetriebenen Hilfsaggregate drehmomentübertragend angebunden werden.

Insbesondere ist vorgesehen, dass der erste und der zweite Zweig zumindest im Wesentlichen parallel angeordnet sind, damit der erste Elektromotor für den Fahrantrieb und der zweite Motor für den Antrieb der Hilfsaggregate verwendet werden kann. Um auch bei höheren Geschwindigkeiten weiterhin den ersten Elektromotor für den Fahrantrieb verwenden zu können, kann das Übersetzungsverhältnis im ersten Zweig geschaltet werden. Dieser Ansatz ist eine besonders vorteilhafte Neuerung, da so die Flexibilität bei einem elektrifizierten Fahrantrieb gesteigert wird, indem ein größerer Geschwindigkeitsbereich abgedeckt wird.

Insbesondere kann sich der zweite Motor grundsätzlich auf die Bereitstellung von Drehmoment für die Hilfsaggregate konzentrieren und beispielsweise nur im Schaltpunkt bzw. beim Schaltvorgang Unterstützung im ersten Zweig für den Fahrantrieb bereitstellen. Es ist überdies vorteilhaft möglich, einen durch den Schaltvorgang normalerweise entstehenden Schaltruck durch den zweiten Elektromotor zu überbrücken bzw. abzufangen. Ansonsten kann der zweite Elektromotor mit Blick auf die Hilfsaggregate vorteilhaft bei optimaler, insbesondere niedrigstmöglicher, Drehzahl betrieben werden, um energieeffizient zu sein.

Die Verbindungseinrichtung kann auch als Kupplungseinrichtung verstanden werden. Die Verbindungseinrichtung kann die Zweige drehmomentübertragend miteinander verbinden bzw. ist hierzu ausgebildet. Beispielsweise kann die Verbindungseinrichtung die Zweige im Fahrbetrieb bzw. bei zumindest einem drehenden Zweig verbinden. Beispielsweise kann die Verbindungseinrichtung einen Formschluss zwischen den Zweigen herstellen. Es ist möglich, dass die Verbindungseinrichtung ausgebildet ist, die Zweige bei zueinander unterschiedlicher Drehzahl miteinander zu verbinden, beispielsweise mittels eines Reib- bzw. Kraftschlusses.

Die Verbindungseinrichtung kann eine/die Reibkupplung bzw. reibschlüssig wirkende Kupplung aufweisen, die eingerichtet ist, in einer/der Geschlossenstellung den ersten und den zweiten Zweig lösbar miteinander zu verbinden. Die Verbindungseinrichtung, insbesondere die Reibkupplung, kann schaltbar und/oder als schaltbare Kupplung ausgebildet sein. Die Verbindungseinrichtung kann zwischen der Geschlossenstellung und einer Offenstellung verstellt werden, um einen lösbaren Reibschluss bereitzustellen. Die Verbindungseinrichtung kann eine Federkraft bereitstellen, um Rotoren gegeneinander zu drücken.

Die Verbindungseinrichtung kann eine synchronisierte und/oder klauengeschaltete Schalteinrichtung aufweisen. Insbesondere kann ein Synchronisator und/oder eine Klauenschalteinrichtung vorgesehen sein.

Beispielsweise kann die Verbindungseinrichtung in der Offenstellung den ersten und den zweiten Zweig voneinander entkoppeln, so dass die Zweige sich relativ zueinander frei drehen können. In der Geschlossenstellung kann die Verbindungseinrichtung dagegen eine feste bzw. drehmomentübertragende Verbindung zwischen den Zweigen bereitstellen.

Die zwei Zweige können drehmomentübertragend miteinander verbunden oder miteinander verbindbar sein, beispielsweise mittels der Verbindungseinrichtung, insbesondere in der Geschlossenstellung. Die Verbindungseinrichtung kann beispielsweise eine zumindest mittelbare und insbesondere im Fahrbetrieb schaltbare Verbindung zwischen der ersten und der zweiten Ausgangswelle bereitstellen. So kann nicht nur der erste, sondern auch der zweite Elektromotor zum Fahrantrieb genutzt werden. So kann ebenfalls nicht nur der zweite, sondern auch der erste Elektromotor zum Antrieb der Hilfsaggregate verwendet werden.

Die Reibkupplung kann als trockene Reibkupplung ausgebildet sein. Die Reibkupplung kann als nasse Reibkupplung ausgebildet sein.

Die Reibkupplung kann eine Lamellenkupplung, insbesondere eine trockene oder nasse Lamellenkupplung, aufweisen oder sein. Die Reibkupplung kann mit Öl gefüllt sein. Das Getriebe kann mit Öl, insbesondere Getriebeöl, gefüllt sein. Die Reibkupplung kann im Getriebeöl teilweise oder vollständig oder gar nicht eingetaucht angeordnet sein. Die Reibkupplung weist typischerweise einen beispielsweise mit Reibbelägen bzw. Kupplungslamellen versehenen Rotor auf. Die Reibkupplung weist typischerweise einen mit dem Rotor zusammenwirkenden weiteren Rotor auf. Einer der Rotoren kann seitens des ersten Zweiges und der andere der Rotoren seitens des zweiten Zweiges angeordnet sein. In der Offenstellung sind die Rotoren vorzugsweise voneinander beabstandet und in der Geschlossenstellung sind die Rotoren vorzugsweise gegeneinander gepresst, um durch den entstehenden Reibschluss bzw. Kraftschluss Drehmoment übertragen zu können. Im Übergang zwischen den Stellungen können Drehzahlabweichungen reibend ausgeglichen werden.

Beispielsweise kann mittels der Verbindungseinrichtung und in Kombination mit zwei Zweigen und zwei Elektromotoren beim Lastwechsel bzw. einem Schaltvorgang ein Ruck reduziert werden. Exemplarisch kann vorübergehend mit dem zweiten Elektromotor der Fahrantrieb übernommen werden, um den Ruck beim Hochschalten im ersten Zweig zu minimieren. Insbesondere kann der Schaltruck minimiert werden, indem der zweite Zweig drehzahlangepasst über die Verbindungseinrichtung mit dem ersten Zweig verbunden wird, wenn geschaltet werden soll, um dann das zum Fahren notwendige Drehmoment durch den zweiten und nicht mehr durch den ersten Elektromotor bereitzustellen. Während der zweite Elektromotor antreibt und der erste Elektromotor im Wesentlichen lastfrei ist, kann im ersten Zweig der aktive Gang herausgenommen werden und die Drehzahl an die Fahrgeschwindigkeit bzw. den zu schaltenden Gang angepasst werden, um dann zu schalten, und um dann das zum Fahren notwendige Drehmoment wieder durch den ersten und nicht mehr durch den zweiten Elektromotor bereitzustellen. Der voranstehend beschriebene Prozess kann zu einer kontinuierlichen Beschleunigung des Traktors verhelfen, ohne dass eine Unterbrechung oder Reduktion der Beschleunigung beim Hochschalten erfolgen muss.

Der erste Zweig kann einen Synchronisator bzw. Synchronizer aufweisen, der zum Bereitstellen der zumindest zwei Übersetzungsverhältnisse in zumindest zwei Stellungen bzw. Gänge schaltbar ist. Der Synchronisator kann zudem in eine Neutralstellung schaltbar sein, wobei in der Neutralstellung der erste Zweig aufgetrennt ist. In der Neutralstellung ist sozusagen der Gang herausgenommen und der erste Elektromotor kann keinen Fahrantrieb leisten. In den anderen Stellungen, beispielsweise in einer ersten und einer zweiten Stellung, kann ein jeweiliges Übersetzungsverhältnis bzw. der entsprechende Gang ausgewählt sein, um den Fahrantrieb bei zwei entsprechenden getrieblichen Spreizungen zu realisieren. Vorzugsweise ist ein erstes Übersetzungsverhältnis für niedrige Geschwindigkeiten, beispielsweise im Bereich bis 20 km/h vorgesehen. Vorzugsweise ist ein zweites Übersetzungsverhältnis für höhere Geschwindigkeiten, beispielsweise im Bereich zwischen 10 und 40 km/h vorgesehen.

Der Synchronisator kann einen Synchronring aufweisen oder dadurch gebildet sein. Der Synchronring kann zwischen den Stellungen verschoben werden. Der Synchronisator ist insbesondere ausgebildet, um in Abhängigkeit von seiner Stellung eine drehmomentübertragende Verbindung bezüglich zumindest zwei oder genau zwei Übersetzungsverhältnissen im ersten Zweig bereitzustellen.

Der erste Zweig kann die Verbindungseinrichtung zwischen dem Synchronisator und einer/der ersten Ausgangswelle aufweisen, insbesondere auf der ersten Ausgangswelle, um den zweiten Elektromotor zumindest mittelbar mit der ersten Ausgangswelle zu verbinden, wenn die Verbindungseinrichtung in der Geschlossenstellung ist. Beispielsweise ist ein/der Rotor der Verbindungseinrichtung drehmomentübertragend mit dem zweiten Zweig verbunden und ein/der weitere Rotor der Verbindungseinrichtung ist drehmomentübertragend mit dem ersten Zweig verbunden.

Der zweite Zweig kann eingerichtet sein, die Verbindungseinrichtung über eine zweite Ausgangswelle anzutreiben. Beispielsweise kann der Rotor mittelbar oder unmittelbar mit der zweiten Ausgangswelle drehmomentübertragend verbunden sein. Es ist möglich, dass der zweite Zweig, insbesondere die zweite Ausgangswelle, getrieblich bzw. über eine Getriebestufe mit der Verbindungseinrichtung verbunden ist. Es ist auch möglich, dass der zweite Zweig, insbesondere die zweite Ausgangswelle, direkt mit der Verbindungseinrichtung verbunden ist.

Der erste Elektromotor und der zweite Elektromotor sind vorzugsweise unterschiedlich ausgebildet, insbesondere im Hinblick auf Baugröße und/oder Leistungsdaten. Damit kann ein kompakterer Aufbau erhalten werden und es kann eine anforderungsgemäße Dimensionierung der Elektromotoren erhalten werden, um Kosten bzw. Energie und Ressourcen einzusparen. Beispielsweise weist der erste Elektromotor ein höheres maximales Drehmoment als der zweite Elektromotor auf. Beispielsweise weist der zweite Elektromotor eine geringere Baulänge als der zweite Elektromotor auf, insbesondere betrachtet in Richtung der jeweiligen Ausgangswelle. Insbesondere ist der erste Elektromotor leistungsstärker und/oder drehmomentstärker als der zweite Elektromotor ausgebildet. Beispielsweise können Elektromotoren mit unterschiedlicher Nennleistung, unterschiedlichem Nenn-Drehmoment und/oder unterschiedlichem Nenn-Strom vorgesehen sein.

Der erste Elektromotor und der zweite Elektromotor können baugleich sein bzw. baugleich ausgebildet sein. Beispielsweise können Elektromotoren mit gleicher Nennleistung, gleichem Nenn-Drehmoment und/oder gleichem Nenn-Strom vorgesehen sein.

Beispielsweise handelt es sich bei dem oder den Elektromotoren um Drehstrom-Elektromotoren, insbesondere Asynchron- oder Synchronmotoren.

Der erste Elektromotor und der zweite Elektromotor können nebeneinander und/oder achsparallel zueinander angeordnet sein. Beispielsweise können die Elektromotoren zumindest abschnittsweise in dem Rahmen angeordnet sein. Die Ausgangswellen der Elektromotoren können zur gleichen Seite bzw. in die gleiche Richtung weisen. Insoweit werden die Elektromotoren vorteilhaft platzsparend angeordnet.

Der Traktor, insbesondere die Getriebebaugruppe bzw. die Antriebsanordnung, kann eine zweite Ausgangswelle für den Antrieb von Hilfsaggregaten aufweisen bzw. bereitstellen. Die zweite Ausgangswelle kann an gegenüberliegenden Seiten des Getriebes zugänglich sein bzw. derart angeordnet sein. Die zweite Ausgangswelle kann auch als die Zapfwelle oder "Power Takeoff"-Welle bzw. "PTO"-Welle für Hilfsaggregate verstanden werden. Die zweite Ausgangswelle kann den Ausgang des zweiten Zweigs des Getriebes darstellen. Die zweite Ausgangswelle kann sich durch das Getriebe erstrecken, um beidseitig zugänglich zu sein. Es können auch mehrere zweite Ausgangswellen vorgesehen sein.

Insbesondere kann eine/die Antriebsanordnung ein Getriebesteuergerät aufweisen. Das Getriebesteuergerät kann einzelne oder mehrere vorliegend beschriebene Merkmale bzw. Verfahrensmerkmale in der Antriebsanordnung umsetzen. Das Getriebesteuergerät kann beispielsweise zum Ansteuern bzw. Schalten der Verbindungseinrichtung eingerichtet sein. Das Getriebesteuergerät kann beispielsweise zum Ansteuern bzw. Betreiben des ersten und/oder des zweiten Elektromotors vorgesehen sein. Beispielsweise ist das Getriebesteuergerät programmierbar und/oder weist ein Steuerungsprogramm auf. Es können auch mehrere Getriebesteuergeräte vorgesehen sein.

Das Getriebesteuergerät bzw. die Antriebsanordnung kann eingerichtet sein, (die) zwei Elektromotoren der Antriebsanordnung anzusteuern, um eine durch den ersten Elektromotor bereitgestellte Ausgangsdrehzahl für einen Fahrantrieb zwischen mindestens zwei Geschwindigkeitsbereichen zu schalten, und um beim Schalten zwischen den mindestens zwei Geschwindigkeitsbereichen bzw. den zwei Geschwindigkeitsbereichen ein Unterstützungsmoment durch den zweiten Elektromotor bereitzustellen, so dass ein Schaltruck bzw. eine Drehmomentreduktion am Ausgang der Antriebsanordnung für den Fahrantrieb (insbesondere an einer ersten Ausgangswelle) minimiert oder vermieden wird.

Es können auch mehr als zwei Geschwindigkeitsbereiche vorgesehen sein, beispielsweise drei, vier, fünf oder mehr Geschwindigkeitsbereiche, die voneinander abweichen können.

Die Antriebsanordnung bzw. das Getriebesteuergerät kann eingerichtet sein, (die) zwei Elektromotoren der Antriebsanordnung gleichzeitig für den Fahrantrieb zu nutzen.

Vorgeschlagen wird weiter eine Antriebsanordnung für einen batterieelektrischen Traktor, die eingerichtet ist, den Traktor in zwei Geschwindigkeitsbereichen bzw. mithilfe von zwei wählbaren Übersetzungsverhältnissen mittels eines ersten Elektromotors anzutreiben und den Traktor bei einem Schaltvorgang zwischen den zwei Geschwindigkeitsbereichen mittels eines zweiten Elektromotors anzutreiben.

Vorgeschlagen wird weiter ein batterieelektrischer Traktor, der eine Antriebsanordnung, insbesondere wie vorliegend beschrieben, für den Fahrantrieb des Traktors und optional zum Antreiben von Hilfsaggregaten des Traktors aufweist.

Vorgeschlagen wird weiter ein Verfahren zum Betreiben eines/des batterieelektrischen Traktors mit einer ein Getriebe aufweisenden Antriebsanordnung. Insbesondere ist vorgesehen, dass der Traktor mittels eines ersten Elektromotors in einem ersten Geschwindigkeitsbereich angetrieben wird und optional Hilfsaggregate des Traktors mittels eines zweiten Elektromotors angetrieben werden, und ein Schaltvorgang des Getriebes durchgeführt wird und der Traktor bei dem Schaltvorgang mittels eines bzw. des zweiten Elektromotors angetrieben wird. Der Schaltvorgang ist insbesondere nach dem Antreiben in dem ersten Geschwindigkeitsbereich vorgesehen. Nach dem Schaltvorgang kann der Traktor mittels des ersten Elektromotors in einem zweiten Geschwindigkeitsbereich angetrieben werden. Vor dem Schaltvorgang kann der zweite Elektromotor an eine der Fahrgeschwindigkeit des Traktors entsprechende Drehzahl angepasst werden, beispielsweise um möglichst ruckelfrei eingekoppelt werden zu können. Vor dem Schaltvorgang kann eine mit dem zweiten Elektromotor drehmomentübertragend verbundene PTO-Kupplung geöffnet werden, um die Hilfsaggregate zumindest temporär nicht zu betreiben. Nach dem Schaltvorgang kann die PTO-Kupplung geschlossen werden, um die Hilfsaggregate wieder betreiben zu können.

Beispielsweise kann bei dem Verfahren am Ende des ersten Geschwindigkeitsbereichs, wenn hochgeschaltet werden soll, die Drehzahl zwischen beiden Elektromotoren synchronisiert werden, um mit dem zweiten Elektromotor möglichst ruckfrei den Fahrantrieb übernehmen zu können. Um bei dem Schaltvorgang den Traktor mittels des zweiten Elektromotors anzutreiben, so dass eine Lastunterbrechung minimiert oder ausgeglichen wird, kann der zweite Elektromotor zuvor in den ersten Zweig eingekoppelt werden bzw. die Verbindungseinrichtung kann in die Geschlossenstellung gestellt werden. Eine Last aus dem Fahrantrieb kann außerdem vom ersten an den zweiten Elektromotor übertragen werden. Sobald der erste Elektromotor lastfrei ist, kann hochgeschaltet werden bzw. der Schaltvorgang vollzogen werden. Während des Hochschaltens, wobei der erste Elektromotor lastfrei ist bzw. der erste Zweig aufgetrennt ist, kann die Drehzahl des ersten Elektromotors entsprechend des höheren Geschwindigkeitsbereichs bzw. des anderen Übersetzungsverhältnisses reduziert werden, so dass ein Einlegen des Gangs ruckfrei gelingen kann. Anschließend kann die Last aus dem Fahrantrieb vom zweiten wieder an den ersten Elektromotor übertragen werden. Der zweite Elektromotor kann danach wieder ausgekoppelt werden bzw. die Verbindungseinrichtung kann in die Offenstellung gestellt werden.

Vorgeschlagen wird weiter eine Verwendung eines Rahmens bei einem Fahrgestell eines batterieelektrischen Traktors. Der Rahmen kann wenigstens teilweise wie vorliegend beschrieben ausgebildet sein. Das Fahrgestell weist insbesondere eine Vorderachsbaugruppe, eine Getriebebaugruppe, und eine Hinterachsbaugruppe auf. Die Getriebebaugruppe umfasst insbesondere eine Antriebsanordnung mit einem elektromotorisch angetriebenen Getriebe für den Fahrantrieb des Traktors. Insbesondere ist vorgesehen, dass der Rahmen als Teil bzw. Komponente des Fahrgestells zur strukturlastentragenden Verbindung der Getriebebaugruppe und der Vorderachsbaugruppe verwendet wird.

Im Rahmen der Offenbarung steht die Abkürzung "bzw." als Kurzform für "beziehungsweise" und soll alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können stets durch "und/oder" ersetzt werden. Weitere vorteilhafte Ausgestaltungen sind Gegenstand weiterer Unteransprüche und werden nachfolgend anhand in mehreren Figuren dargestellter Ausführungsbeispiele beschrieben. Es zeigen:
- Figur 1: einen batterieelektrischen Traktor in schematischer Seitenansicht
- Figur 2: ein Fahrgestell des Traktors in perspektivischer Ansicht
- Figur 3: das Fahrgestellt in einer weiteren perspektivischen Ansicht
- Figur 4: eine Antriebsanordnung einer Getriebebaugruppe des Fahrgestells in schematischer Ansicht

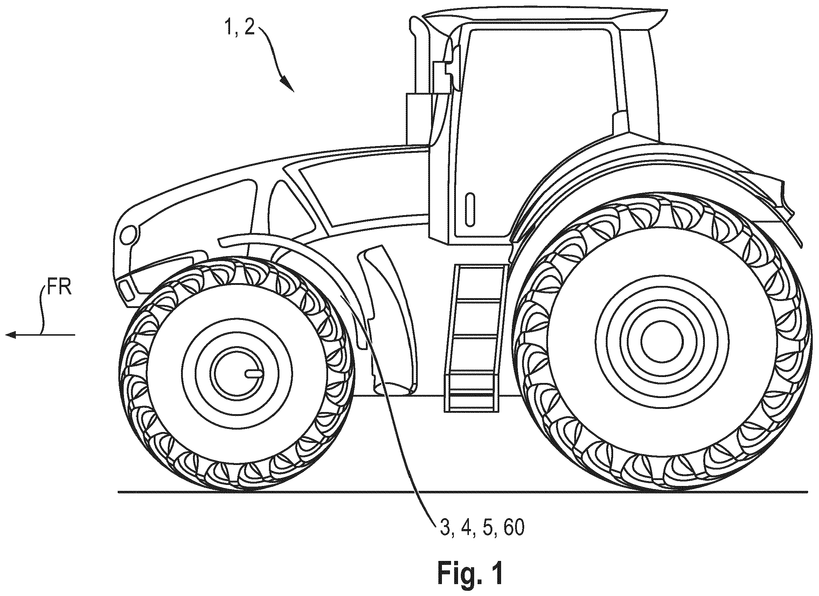

Fig. 1 zeigt einen batterieelektrischen Traktor 1 mit Hilfsaggregaten 2 und mit einem Fahrgestell 3, das eine Getriebebaugruppe aufweist, die eine Antriebsanordnung 4 mit einem elektromotorisch angetriebenen Getriebe 5 für den Fahrantrieb des Traktors 1 umfasst. Ferner weist der Traktor 1 einen elektrischen Energiespeicher 60 auf, der die Antriebsanordnung 4 mit Energie versorgen kann. Der Traktor 1, insbesondere sein Fahrgestell 3, ist elektrifiziert.

Eine Fahrzeuglängsrichtung FR erstreckt sich vorliegend in der Bildebene horizontal bzw. von rechts nach links. Der Traktor 1 weist als Bodeneingriffsmittel an einer vorliegend lenkbaren, pendelnd aufgehängten Vorderachse und einer vorliegend starren Hinterachse jeweils zwei angetriebene Räder auf. Eine Kabine ist oberhalb vom bzw. auf dem Fahrgestellt 3 festgelegt.

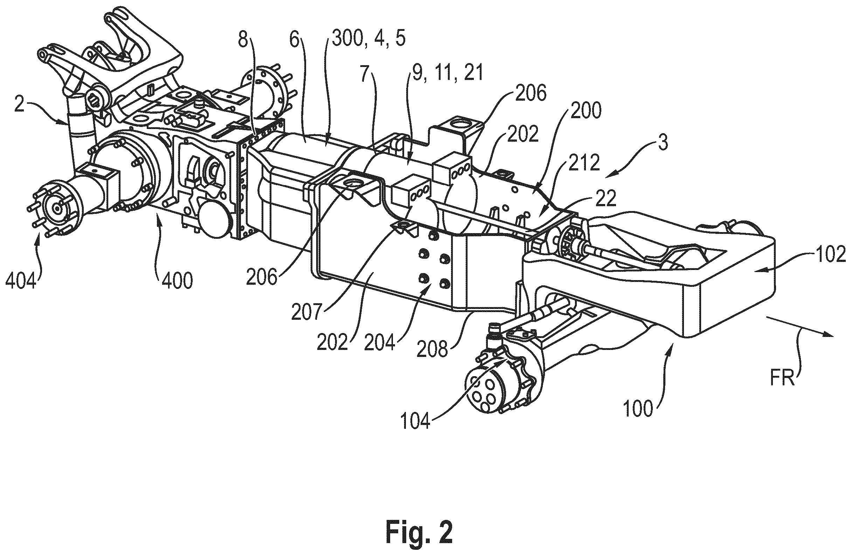

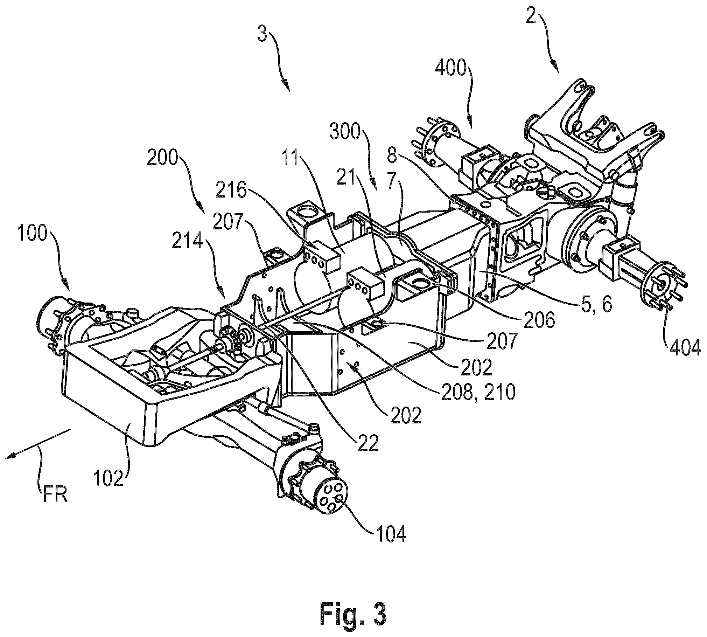

Fig. 2 und Fig. 3 zeigen im Wesentlichen nur das Fahrgestell 3 des Traktors 1 aus Fig. 1. Das Fahrgestell 3 weist eine Vorderachsbaugruppe 100, eine Getriebebaugruppe 300, eine Hinterachsbaugruppe 400 und einen Rahmen 200 zur strukturlastentragenden Verbindung der Getriebebaugruppe 300 und der Vorderachsbaugruppe 100 auf. Die Getriebebaugruppe 300 ist ebenfalls zur strukturlastentragenden Verbindung ausgebildet, und zwar zur Verbindung von der Hinterachsbaugruppe 400 und dem Rahmen 200.

Die Vorderachsbaugruppe 100 weist einen Rahmenabschnitt 102 auf, der die pendelnd aufgehängte Vorderachse 104 trägt. Der Rahmenabschnitt 102 ist rückwärtig über einen Flansch am Rahmen 200 festgelegt bzw. daran verschraubt.

Die Vorderachsbaugruppe 100 kann auch Hilfsaggregate 2 aufweisen. Die Vorderachse 104 weist eine Bremseinrichtung, ein Lenkgetriebe sowie ein Vorderachsdifferential auf bzw. trägt diese. Nicht dargestellt sind ein Frontkraftheber und ein Hubzylinder.

Die Hinterachsbaugruppe 400 weist die starre Hinterachse 404 nebst, unter anderem, einem Hinterachsdifferential mit einer Differentialsperre, einer Getriebe-Hydraulik, einer Traktor-Hydraulik, einer Anbaugruppe in Form eines Heckhubwerks und einer Bremseinrichtung als Hilfsaggregate 2 auf bzw. trägt diese.

Die Hilfsaggregate 2 können wenigstens teilweise durch die Getriebebaugruppe 300 bzw. eine Zapfwelle der Getriebebaugruppe 300, insbesondere zweite Ausgangswelle 22, mit Drehmoment versorgt werden.

Der Rahmen 200 ist in Fahrzeuglängsrichtung FR zwischen der Getriebebaugruppe 300 und der Vorderachsbaugruppe 100 angeordnet. Die Getriebebaugruppe 300 ist in Fahrzeuglängsrichtung FR zwischen dem Rahmen 200 und der Hinterachsbaugruppe 400 angeordnet. Der Rahmen 200 ist an der Getriebebaugruppe 300 und an der Vorderachsbaugruppe 100 befestigt, beispielsweise an einem Gehäuse 6 des Getriebes 5 verschraubt, z.B. ein- oder beidseitig über bevorzugt bündig aneinander anliegende Flansche.

Ausgehend von der Getriebebaugruppe 300 erstreckt sich eine/die zweite Ausgangswelle 22, genauer gesagt die Zapfwelle, durch den Rahmen 200 hindurch und bis zur Vorderachsgruppe 100. Der Rahmen 200 weist seitens der Vorderachsbaugruppe 100 und seitens der Getriebebaugruppe 300 jeweils einen Durchgang auf, beispielsweise um die Zapfwelle jeweils hindurch zu führen. Der jeweilige Durchgang ist vom jeweiligen Flansch des Rahmens 200 gebildet. Die Zapfwelle kann im Rahmen 200 und/oder in der Vorderachsbaugruppe 100 gelagert sein.

Der Rahmen 200 ist vorliegend abschnittsweise als Schweißkonstruktion aus einer Stahllegierung und abschnittsweise als zumindest ein Gussteil aus Gusseisen oder Gussstahl ausgebildet. Insoweit weist der Rahmen 200 mehrere Eisenlegierungen auf. Der Rahmen 200 ist insbesondere aus mehreren Teilen zusammengesetzt bzw. zusammengefügt.

Der Rahmen 200 weist zwei quer zur Fahrzeuglängsrichtung FR gegenüberliegende Wandungen 202 auf. Die Wandungen 202 sind zumindest im Wesentlichen parallel zueinander angeordnet. Die Wandungen 202 sind zueinander bzw. aneinander festgelegt. Die Wandungen 202 weisen jeweils eine außenseitig zugängliche Befestigungsmöglichkeit 204 in Form mehrerer Bohrungen zum Befestigen einer Frontladerkonsole auf.

Die Wandungen 202 sind mit quer zur Fahrzeuglängsrichtung FR einander gegenüberliegenden Haltern 206 zum Abstützen und Befestigen der Kabine des Traktors 1 versehen. Der in Fig. 2 nicht gezeigte Energiespeicher ist oberhalb des Rahmens 200 angeordnet, wobei die Wandungen 202 zweite Halter 207 zum Abstützen und Befestigen des Energiespeichers aufweist/aufweisen. Die Halter 206 und 207 weisen jeweils oberseitige, horizontal orientierte Auflageflächen auf.

Der Rahmen 200 weist einen unterseitigen Boden 208 und eine oberseitige Öffnung 212 auf. Der Boden 208 ist durch Versteifungselemente 210 in Form von Rippen gebildet, die sich quer zur Fahrzeuglängsrichtung FR erstrecken und insbesondere die Wandungen 202 verbinden.

Der Rahmen 200 weist seitens der Vorderachsbaugruppe 100 einen Verjüngungsbereich 214 und seitens der Getriebebaugruppe 300 einen Motoraufnahmebereich 216 auf. Der Motoraufnahmebereich 216 ist quer zur Fahrzeuglängsrichtung FR breiter als der Verjüngungsbereich 214. Die Antriebsanordnung 4, genauer gesagt zwei Elektromotoren 11, 21 der Antriebsanordnung 4 und diesen zugeordnete Wechselrichter 9, sind wenigstens teilweise in dem Motoraufnahmebereich 216 aufgenommen.

Dargestellt und beschrieben ist eine Verwendung eines Rahmens 200 bei einem Fahrgestell 3 eines batterieelektrischen Traktors 1, wobei das Fahrgestell 3 eine Vorderachsbaugruppe 100, eine Getriebebaugruppe 300, und eine Hinterachsbaugruppe 400 aufweist, wobei die Getriebebaugruppe 300 eine Antriebsanordnung 4 mit einem elektromotorisch angetriebenen Getriebe 5 für den Fahrantrieb des Traktors 1 umfasst, und wobei der Rahmen 200 als Teil des Fahrgestells 3 zur strukturlastentragenden Verbindung der Getriebebaugruppe 300 und der Vorderachsbaugruppe 100 verwendet wird.

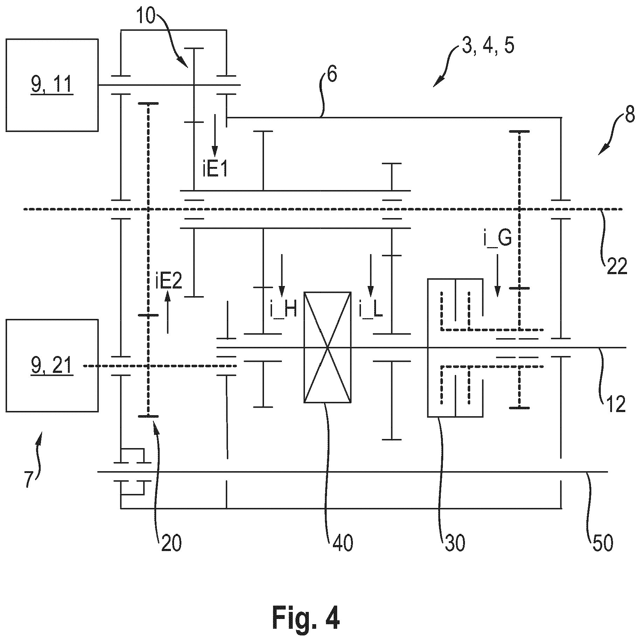

Das in Fig. 4 näher gezeigte Getriebe 5 der Antriebsanordnung 4 des Fahrgestells 3 weist einen ersten Zweig 10 mit dem ersten Elektromotor 11 für den Fahrantrieb des Traktors 1 und einen zweiten Zweig 20 mit dem zweiten Elektromotor 21 für den Antrieb von den Hilfsaggregaten 2 des Traktors 1 auf. Den Elektromotoren 11, 21 ist jeweils ein Wechselrichter 9 zugeordnet. Es ist auch möglich, dass ein Wechselrichter 9 für beide Elektromotoren 11, 21 vorgesehen ist. Die Wechselrichter 9 werden jeweils vom Energiespeicher 60 direkt oder indirekt mit elektrischer Energie versorgt. Der Wechselrichter 9 ist beispielsweise jeweils am Elektromotor 11 bzw. 21 befestigt oder alternativ entfernt davon angeordnet.

Die Elektromotoren 11, 21 können über eine vorliegend nicht näher gezeigte Adapterplatte an dem Gehäuse 6 festgelegt sein.

Die Elektromotoren 11, 21 sind vorliegend außerhalb von einem Gehäuse 6 des Getriebes 5 angeordnet, genauer gesagt auf einer Eingangsseite 7 des Getriebes 5. Die Eingangsseite 7 befindet sich gegenüberliegend von einer weiteren Seite 8. Die Eingangsseite 7 ist vorliegend seitens des in Fig. 4 nicht gezeigten Rahmens angeordnet, der die Elektromotoren 11, 21 aufnimmt bzw. umgibt. Die Eingangsseite 7 befindet sich bevorzugt in Fahrtrichtung bzw. in Fahrzeuglängsrichtung FR vorne.

Unter näherer Betrachtung des ersten Zweigs 10 ist der erste Elektromotor 11 einstufig, insbesondere drehzahlreduzierend bzw. mit einem Übersetzungsverhältnis iE1 > 1, an einen schaltbaren Getriebeteil angebunden.

Der erste Zweig 10, insbesondere der schaltbare Getriebeteil, ist mittels eines Synchronisators 40 mit einem Synchronring zwischen zumindest zwei, insbesondere jeweils drehzahlreduzierenden, Übersetzungsverhältnissen i_L und i_H schaltbar, im Grunde zwischen einem ersten bzw. niedrigen und einem zweiten bzw. höheren Gang. Der Synchronisator 40 ist zum Bereitstellen der zwei Übersetzungsverhältnisse i_L und i_H zwischen zwei Stellungen und einer Neutralstellung schaltbar. Die Neutralstellung liegt vorliegend zwischen den zwei Stellungen, so dass beim Schalten die Neutralstellung immer zwischengeschaltet wird. In der Neutralstellung ist der erste Zweig 10 aufgetrennt, d.h. es kann vom ersten Elektromotor 11 kein Drehmoment zum Fahrantrieb genutzt werden. In einer der zwei Stellungen ist der erste Zweig 10 nicht aufgetrennt bzw. kann der erste Zweig 10 Drehmoment vom ersten Antriebsmotor 11 bis hin zu einer ersten Ausgangswelle 12 übertragen, und zwar insbesondere mit einem Gesamtübersetzungsverhältnis in Abhängigkeit von dem Übersetzungsverhältnis iE1 und der Auswahl aus den Übersetzungsverhältnissen i_H bzw. i_L. Weitere Übersetzungsverhältnisse bzw. Abstufungen im ersten Zweig 10 sind möglich, aber nicht gezeigt.

Unter Betrachtung des zweiten Zweigs 20 ist der zweite Elektromotor 21 einstufig, insbesondere drehzahlreduzierend bzw. mit einem Übersetzungsverhältnis iE2 > 1, an eine zweite Ausgangswelle 22 angebunden. Die zweite Ausgangswelle 22 ist vorliegend durch einen Teil des schaltbaren Getriebeteils geführt; andere Ausgestaltungen sind denkbar. Weitere Übersetzungsverhältnisse bzw. Abstufungen im zweiten Zweig 20 sind möglich, aber nicht gezeigt.

Die erste Ausgangswelle 12 ist vorliegend zumindest gegenüberliegend von der Eingangsseite 7 bzw. an einer weiteren Seite 8 zugänglich. Die zweite Ausgangswelle 22 ist vorliegend an der Eingangsseite 7 und an der weiteren Seite 8 zugänglich. Die erste Ausgangswelle 12 ist vorliegend gegenüberliegend von der Eingangsseite 7 bzw. an der weiteren Seite 8 zugänglich Die Ausgangswellen 12, 22 sind vorliegend achsparallel angeordnet.

Der zweite Zweig 20 ist mittels einer Verbindungseinrichtung 30 des Getriebes 5 mit dem ersten Zweig 10 drehmomentübertragend, zumindest vorübergehend, insbesondere im Fahrbetrieb, verbindbar. Im Grunde bildet die Verbindungseinrichtung 30 eine Brücke zwischen den Zweigen 10, 20. Insbesondere ist die zweite Ausgangswelle 22 einstufig, beispielsweise drehzahlreduzierend bzw. mit einem Übersetzungsverhältnis i_G > 1 oder drehzahlsteigernd bzw. mit einem Übersetzungsverhältnis i_G < 1, an einen Rotor der Verbindungseinrichtung 30 angebunden.

Die Verbindungseinrichtung 30 weist eine Reibkupplung, genauer gesagt eine nasse Lamellenkupplung, auf. Die Verbindungseinrichtung 30 ist eingerichtet, in einer Geschlossenstellung den ersten 10 und den zweiten 20 Zweig lösbar drehmomentübertragend miteinander zu verbinden, um den zweiten Elektromotor 21 zumindest vorübergehend bzw. temporär für den Fahrantrieb des Traktors 1 zu nutzen.

Die Verbindungseinrichtung 30 kann zwischen der Geschlossenstellung und einer Offenstellung verstellt werden, um einen lösbaren Reibschluss bereitzustellen. In der Geschlossenstellung ist der mit beispielsweise zumindest einer Kupplungslamelle versehene Rotor kraftschlüssig bzw. reibschlüssig mit einem weiteren Rotor, beispielsweise einer Schwungscheibe, der Verbindungseinrichtung 30 verbunden, so dass Drehmoment zwischen erstem 10 und zweitem 20 Zweig übertragen werden kann. Der Rotor und der weitere Rotor können federkraftunterstützt axial gegeneinander gedrückt werden.

Mit der Reibkupplung können Drehzahlabweichungen bzw. Drehzahldifferenzen beim Einkuppeln, das heißt beim Wechsel von einer Offenstellung in die Geschlossenstellung, komfortabel ausgeglichen werden.

Der erste Zweig 10 weist die Verbindungseinrichtung 30 zwischen dem Synchronisator 40 und der ersten Ausgangswelle 12 auf, um den zweiten Elektromotor 21 in der Geschlossenstellung mittelbar mit der ersten Ausgangswelle 12 zu verbinden. Der zweite Zweig ist zum Antreiben der Verbindungseinrichtung 30 über die zweite Ausgangswelle 22 eingerichtet.

Die Verbindungseinrichtung 30 ist beispielsweise mit Öl gefüllt und/oder ist wenigstens teilweise oder - je nach Füllstand bzw. je nach Anordnung - vollständig in einem Getriebeöl des Getriebes 5 eingetaucht angeordnet.

In der Geschlossenstellung können beide Elektromotoren 11 und 21 für den Fahrantrieb genutzt werden, beispielsweise auch nur der erste Elektromotor 11 oder nur der zweite Elektromotor 21.

Der erste Elektromotor 11 und der zweite Elektromotor 21 sind insbesondere im Hinblick auf Leistungsdaten unterschiedlich ausgebildet. Der erste Elektromotor 11 weist ein höheres maximales Drehmoment als der zweite Elektromotor auf. Der zweite Elektromotor 21 kann eine größere Baulänge aufweisen als der erste Elektromotor 11. Der erste 11 und der zweite Elektromotor 21 sind nebeneinander und achsparallel zueinander angeordnet.

Das Getriebe 5 weist ferner eine Übertragungswelle 50 auf. Diese erstreckt sich beispielsweise ausgehend von einem hier nicht gezeigten Hinterachsgetriebe bzw. Hinterachsdifferential und/oder Verteilergetriebe. Die Übertragungswelle 50 ist beispielsweise vorgesehen, den Fahrantrieb im Fall eines mehrachsigen Fahrantriebs oder Allradantriebs bereitzustellen.

Die Übertragungswelle 50, die erste Ausgangswelle 12, die zweite Ausgangswelle 22, der schaltbare Getriebeteil, und/oder andere Wellen des Getriebes sind, zumindest abschnittsweise und/oder teilweise, vorzugsweise an jeweils wenigstens zwei axialen Stellen, im Gehäuse 6 des Getriebes 5 gelagert und/oder sind zueinander achsparallel angeordnet.

Dargestellt und beschrieben ist hinsichtlich Fig. 4 eine Antriebsanordnung 4 für einen batterieelektrischen Traktor 1, die einen ersten 11 und einen zweiten 21 Elektromotor aufweist und eingerichtet ist, den Traktor 1 in mindestens zwei Geschwindigkeitsbereichen mittels des ersten Elektromotors 11 anzutreiben und den Traktor 1 bei einem Schaltvorgang zwischen den mindestens zwei Geschwindigkeitsbereichen bzw. den zwei Geschwindigkeitsbereichen mittels des zweiten Elektromotors 21, insbesondere zumindest vorübergehend und zum Abstützen einer Lastunterbrechung, anzutreiben.

Nicht detailliert dargestellt ist eine Antriebsanordnung, die eingerichtet ist, einen Traktor in drei oder mehr Geschwindigkeitsbereichen anzutreiben.

Dargestellt und beschrieben ist hinsichtlich Fig. 1 ein batterieelektrischer Traktor 1, aufweisend eine Antriebsanordnung 4 für den Fahrantrieb des Traktors 1 und zum Antreiben von Hilfsaggregaten 2 des Traktors 1.

Die Antriebsanordnung 4 der Fig. 4 eignet sich zur Durchführung eines Verfahrens zum Betreiben eines batterieelektrischen Traktors 1 mit einer ein Getriebe 5 aufweisenden Antriebsanordnung 4, wobei der Traktor 1 mittels eines ersten Elektromotors 11 in einem ersten Geschwindigkeitsbereich angetrieben wird, wobei ein Schaltvorgang des Getriebes 5 durchgeführt wird und der Traktor 1 bei dem Schaltvorgang mittels eines zweiten Elektromotors 21 angetrieben wird, und wobei der Traktor 1 nach dem Schaltvorgang mittels des ersten Elektromotors 11 in einem zweiten Geschwindigkeitsbereich angetrieben wird und vor dem Schaltvorgang der zweite Elektromotor 21 an eine einer Fahrgeschwindigkeit des Traktors 1 entsprechenden Drehzahl angepasst wird.

Dargestellt und beschrieben ist hinsichtlich Fig. 4 eine Antriebsanordnung 4, die ein Getriebesteuergerät aufweist, das eingerichtet ist, zwei Elektromotoren 11, 21 der Antriebsanordnung 4 anzusteuern, um eine durch den ersten Elektromotor 11 bereitgestellte Ausgangsdrehzahl für einen Fahrantrieb zwischen zwei Geschwindigkeitsbereichen zu schalten, und um beim Schalten zwischen den Geschwindigkeitsbereichen ein Unterstützungsmoment durch den zweiten Elektromotor 21 bereitzustellen, so dass ein Schaltruck bzw. eine Drehmomentreduktion am Ausgang der Antriebsanordnung 4 für den Fahrantrieb minimiert oder vermieden wird.

Die Antriebsanordnung 4 bzw. das Getriebesteuergerät ist insbesondere eingerichtet, die zwei Elektromotoren 11, 21 der Antriebsanordnung 4 gleichzeitig für den Fahrantrieb zu nutzen.

In der Praxis kann sich die Funktionsweise des in Fig. 4 gezeigten und voranstehend beschriebenen Getriebes 5 zumindest auszugsweise wie folgt darstellen.

Erster Geschwindigkeitsbereich: Der zweite Elektromotor 21 versorgt die zweite Ausgangswelle 22, über die beispielsweise Hilfsaggregate wie Hydraulikpumpen angetrieben werden. Die Hilfsaggregate können in einem nicht dargestellten Hilfsgetriebe bzw. PTO-Getriebe verbaut sein. Eine Kupplung des PTO-Getriebes kann geöffnet sein, wenn keine Versorgung von der zweiten Ausgangswelle 22 benötigt ist, oder auch geschlossen sein. Falls der Betrieb von Hilfsaggregaten angefordert wird, kann die Kupplung des PTO-Getriebes geschlossen werden und/oder der zweite Elektromotor 21 die zweite Ausgangswelle 22 mit der angeforderten Drehzahl betreiben. Der erste Elektromotor 11 versorgt über den in das Übersetzungsverhältnis i_L geschalteten bzw. eingerückten Synchronisator 40 die erste Ausgangswelle 12. In diesem Betriebszustand kann der Traktor 1 den Geschwindigkeitsbereich von beispielsweise ± 20 km/h abdecken. Die Verbindungseinrichtung 30 ist insbesondere in der Offenstellung. Die zwei Elektromotoren 11, 21 können im Grunde unabhängig voneinander betrieben werden.

Schaltvorgang bzw. Hochschalten, wenn keine Hilfsaggregate angetrieben werden bzw. ohne PTO: Am Ende des ersten Geschwindigkeitsbereichs können die Drehzahlen zwischen dem ersten 10 und dem zweiten 20 Zweig synchronisiert werden, insbesondere indem der zweite Elektromotor 21 entsprechend angesteuert wird. Die Verbindungseinrichtung 30 kann die Verbindung zwischen den Zweigen 10, 20 bereitstellen bzw. in die Geschlossenstellung geschaltet werden. Danach sind beide Zweige 10, 20 gekoppelt und damit beide Elektromotoren 11, 21 mit der ersten Ausgangswelle 12 verbunden. Die Elektromotoren 11, 21 werden angesteuert, um die Last vom ersten 11 auf den zweiten 21 Elektromotor zu übertragen, damit schließlich nur noch der zweite Elektromotor 21 den Fahrantrieb bereitstellt. Sobald der erste Elektromotor 11 lastfrei ist, kann der Synchronisator 40 vom Übersetzungsverhältnis i_L in die Neutralstellung bzw. in die Mitte geschaltet werden. Die Drehzahl des ersten Elektromotors 11 wird dann reduziert, so dass eine Drehzahlgleichheit zwischen der ersten Ausgangswelle 12 und dem anderen Übersetzungsverhältnis i_H entsteht, in das der Synchronisator 40 geschaltet werden soll. Anschließend kann der Synchronisator 40 zum Übersetzungsverhältnis i_H bzw. nach rechts geschaltet werden. Dann kann der Lastübertrag aus dem Fahrantrieb zurück vom zweiten 21 auf den ersten 11 Elektromotor erfolgen. Die Verbindungseinrichtung kann dann die Verbindung zwischen den Zweigen 10, 20 wieder trennen bzw. in die Offenstellung geschaltet werden. Dann ist der zweite Elektromotor 21 wieder unabhängig für die PTO verwendbar, also zum Antrieb der zweiten Ausgangswelle 22 bzw. Zapfwelle, beispielsweise um die Hilfsaggregate wie die Hydraulikpumpen zu versorgen.

Zweiter Geschwindigkeitsbereich: Im zweiten Geschwindigkeitsbereich kann die Ausgangswelle 22, über die beispielsweise Hilfsaggregate wie die Hydraulikpumpen angetrieben werden, wie bereits im ersten Geschwindigkeitsbereich mittels des zweiten Elektromotors 21 versorgt werden. Die Kupplung des PTO-Getriebes kann geöffnet oder geschlossen sein. Der Synchronisator 40 ist ins Übersetzungsverhältnis i_H bzw. in den höheren Gang geschaltet. Bei geringeren Lasten wie z.B: Straßenfahrt und/oder ohne Anhänger kann der Traktor 1 dauerhaft und/oder ausgehend vom Stillstand in diesem Übersetzungsverhältnis bzw. im höheren Gang fahren.

Schaltvorgang bzw. Hochschalten, wenn Hilfsaggregate abgetrieben werden bzw. mit PTO: Im PTO-Betrieb bzw. wenn die zweite Ausgangswelle 22 zum Antrieb der Hilfsaggregate verwendet wird, ist ist die Drehzahl der zweiten Ausgangswelle 22 regelmäßig vorgegeben, so dass der Schaltpunkt nicht unter Verwendung des zweiten Zweigs 20 bzw. des zweiten Elektromotors 21 abgestützt werden kann. Deshalb kann ein Schaltvorgang bzw. das Hochschalten auch mit Zugkraftunterbrechung erfolgen. Dabei kann der erste Elektromotor 11 mit zum Übersetzungsverhältnis i_L geschalteten Synchronisator 40 den über die erste Ausgangswelle 12 betriebenen Fahrantrieb bereitstellen. Dann wird der erste Elektromotor 11 lastfrei geschaltet, um den Synchronisator 40 in die Neutralstellung zu schalten. Die Drehzahl des ersten Elektromotors 11 wird dann reduziert, so dass eine Drehzahlgleichheit zwischen der ersten Ausgangswelle 12 und dem anderen Übersetzungsverhältnis i_H entsteht, in das der Synchronisator 40 geschaltet werden soll. Anschließend kann der Synchronisator 40 zum Übersetzungsverhältnis i_H bzw. nach rechts geschaltet werden. Anschließend kann der Synchronisator 40 zum Übersetzungsverhältnis i_H bzw. nach rechts geschaltet werden. Dann kann der erste Elektromotor 11 im nun eingelegten höheren Gang den Fahrantrieb leisten.

Eine Drehzahl der zweiten Ausgangswelle 22 kann mit der voranstehend beschriebenen Verschaltung immer, zumeist außer im Schaltpunkt und/oder im PTO-Betrieb, auf ein Minimum abgesenkt werden, so dass ein großer Effizienzvorteil geschaffen wird.

Die Verbindungseinrichtung 30 kann durch den Reibschluss Drehzahldifferenzen ausgleichen und kann dadurch zu jeder Zeit sicher Hilfsaggregate, insbesondere die Hydraulik, vom Fahrantrieb entkoppeln. Dieser Aspekt ist in Bezug auf Sicherheit von großem Vorteil.

### Bezugszeichenliste:

- 1: Traktor
- 2: Hilfsaggregat
- 3: Fahrgestell
- 4: Antriebsanordnung
- 5: Getriebe
- 6: Gehäuse
- 7: Eingangsseite
- 8: weitere Seite
- 9: Wechselrichter
- 10: erster Zweig
- 11: erster Elektromotor
- 12: erste Ausgangswelle
- 20: zweiter Zweig
- 21: zweiter Elektromotor
- 22: zweite Ausgangswelle
- 30: Verbindungseinrichtung
- 40: Synchronisator
- 50: Übertragungswelle
- 60: Energiespeicher
- 100: Vorderachsbaugruppe
- 102: Vorderachsrahmen bzw. Rahmenabschnitt
- 104: Vorderachse
- 200: Rahmen
- 202: Wandung
- 204: Befestigungsmöglichkeit
- 206: Halter
- 207: Halter
- 208: Boden
- 210: Versteifungselement
- 212: Öffnung
- 214: Verjüngungsbereich
- 216: Motoraufnahmebereich
- 300: Getriebebaugruppe
- 400: Hinterachsbaugruppe
- 404: Hinterachse
- FR: Fahrzeuglängsrichtung
- iE1: Übersetzungsverhältnis
- iE2: Übersetzungsverhältnis
- i_L: Übersetzungsverhältnis
- i_H: Übersetzungsverhältnis
- i_G: Übersetzungsverhältnis

## Patentansprüche

1. Batterieelektrischer Traktor (1) mit einem Fahrgestell (3), das eine Vorderachsbaugruppe (100), eine Getriebebaugruppe (300), und eine Hinterachsbaugruppe (400) aufweist, wobei die Getriebebaugruppe (300) eine Antriebsanordnung (4) mit einem elektromotorisch angetriebenen Getriebe (5) für den Fahrantrieb des Traktors (1) umfasst, **dadurch gekennzeichnet, dass** das Fahrgestell (3) einen Rahmen (200) zur strukturlastentragenden Verbindung der Getriebebaugruppe (300) und der Vorderachsbaugruppe (100) aufweist.

2. Batterieelektrischer Traktor (1) nach einem der voranstehenden Ansprüche, **dadurch gekennzeichnet, dass** der Rahmen (200) in Fahrzeuglängsrichtung (FR) zwischen der Getriebebaugruppe (300) und der Vorderachsbaugruppe (100) angeordnet ist, und dass die Getriebebaugruppe (200) in Fahrzeuglängsrichtung (FR) zwischen dem Rahmen (200) und der Hinterachsbaugruppe (400) angeordnet ist, insbesondere wobei der Rahmen (200) mit der Getriebebaugruppe (300) und/oder der Vorderachsbaugruppe (100) verschraubt ist.

3. Batterieelektrischer Traktor (1) nach einem der voranstehenden Ansprüche, **dadurch gekennzeichnet, dass** der Rahmen (200) wenigstens abschnittsweise als Schweißkonstruktion und/oder als Gussteil ausgebildet ist, vorzugsweise wobei der Rahmen (200) eine Eisenlegierung aufweist oder daraus besteht.

4. Batterieelektrischer Traktor (1) nach einem der voranstehenden Ansprüche, **dadurch gekennzeichnet, dass** der Rahmen (200) zwei quer zur Fahrzeuglängsrichtung (FR) gegenüberliegende Wandungen (202) aufweist.

5. Batterieelektrischer Traktor (1) nach einem der voranstehenden Ansprüche, **dadurch gekennzeichnet, dass** zumindest eine von den Wandungen (202) eine Befestigungsmöglichkeit (204), insbesondere eine oder mehrere Bohrungen, zum Befestigen einer Frontladerkonsole aufweist.

6. Batterieelektrischer Traktor (1) nach einem der voranstehenden Ansprüche, **dadurch gekennzeichnet, dass** die Wandungen (202) mit Haltern (206) zum Abstützen und Befestigen einer Kabine des Traktors (1) versehen sind.

7. Batterieelektrischer Traktor (1) nach einem der voranstehenden Ansprüche, **gekennzeichnet durch** einen Energiespeicher (60) zur Energieversorgung der Antriebsanordnung (4), wobei der Energiespeicher (60) zumindest bereichsweise oberhalb des Rahmens (200) angeordnet ist, insbesondere wobei der Rahmen (200), bevorzugt die Wandungen (202), zweite Halter (207) zum Abstützen und Befestigen des Energiespeichers (60) aufweist/aufweisen.

8. Batterieelektrischer Traktor (1) nach einem der voranstehenden Ansprüche, **dadurch gekennzeichnet, dass** der Rahmen (200) einen unterseitigen Boden (208) und insbesondere eine oberseitige Öffnung (212) aufweist, vorzugsweise wobei der Boden (208) mit Versteifungselementen (210), beispielsweise Rippen, versehen oder dadurch gebildet ist.

9. Batterieelektrischer Traktor (1) nach einem der voranstehenden Ansprüche, **dadurch gekennzeichnet, dass** das Getriebe (5) einen ersten Zweig (10) mit einem ersten Elektromotor (11) für den Fahrantrieb des Traktors (1) und einen zweiten Zweig (20) mit einem zweiten Elektromotor (21) für den Antrieb von Hilfsaggregaten (2) des Traktors (1) aufweist.

10. Batterieelektrischer Traktor (1) nach einem der voranstehenden Ansprüche, **dadurch gekennzeichnet, dass** der Rahmen (200) seitens der Vorderachsbaugruppe (100) einen Verjüngungsbereich (214) und seitens der Getriebebaugruppe (300) einen Motoraufnahmebereich (216) aufweist, wobei der Motoraufnahmebereich (216) quer zur Fahrzeuglängsrichtung (FR) breiter ist als der Verjüngungsbereich (214), bevorzugt wobei die Antriebsanordnung (4), insbesondere die zwei Elektromotoren (11, 21), wenigstens teilweise in dem Motoraufnahmebereich (216) aufgenommen ist.

11. Batterieelektrischer Traktor (1) nach einem der voranstehenden zwei Ansprüche, **dadurch gekennzeichnet, dass** der erste Zweig (10) zwischen zumindest zwei Übersetzungsverhältnissen schaltbar ist und das Getriebe (5) eine Verbindungseinrichtung (30), insbesondere Reibkupplung, aufweist, die eingerichtet ist, in einer Geschlossenstellung den ersten (10) und den zweiten (20) Zweig drehmomentübertragend miteinander zu verbinden, um den zweiten Elektromotor (21) für den Fahrantrieb des Traktors (1) zu nutzen.

12. Batterieelektrischer Traktor (1) nach einem der voranstehenden drei Ansprüche, **dadurch gekennzeichnet, dass** der erste Zweig (10) einen Synchronisator (40) aufweist, der zum Bereitstellen der zumindest zwei Übersetzungsverhältnisse in zumindest zwei Stellungen schaltbar ist und zudem in eine Neutralstellung schaltbar ist, wobei in der Neutralstellung der erste Zweig (10) aufgetrennt ist.

13. Batterieelektrischer Traktor (1) nach einem der voranstehenden vier Ansprüche, **dadurch gekennzeichnet, dass** der erste Elektromotor (11) ein höheres maximales Drehmoment als der zweite Elektromotor (21) aufweist, sind und/oder der erste Elektromotor (11) und der zweite Elektromotor (21) nebeneinander und/oder achsparallel zueinander angeordnet sind.

14. Batterieelektrischer Traktor (1) nach einem der voranstehenden Ansprüche, **dadurch gekennzeichnet, dass** eine zweite Ausgangswelle (22) für den Antrieb von Hilfsaggregaten (2) an gegenüberliegenden Seiten (7, 8) des Getriebes (5) zugänglich ist.

15. Verwendung eines Rahmens (200) bei einem Fahrgestell (3) eines batterieelektrischen Traktors (1), wobei das Fahrgestell (3) eine Vorderachsbaugruppe (100), eine Getriebebaugruppe (300), und eine Hinterachsbaugruppe (400) aufweist, wobei die Getriebebaugruppe (300) eine Antriebsanordnung (4) mit einem elektromotorisch angetriebenen Getriebe (5) für den Fahrantrieb des Traktors (1) umfasst, und wobei der Rahmen (200) als Teil des Fahrgestells (3) zur strukturlastentragenden Verbindung der Getriebebaugruppe (300) und der Vorderachsbaugruppe (100) verwendet wird.
